# EUROPEAN PATENT APPLICATION

(11) **EP 1 365 309 A1**
(43) Date of publication of application: **26.11.2003**
(21) Application number: 03252799.6
(22) Date of filing: 02.05.2003
(51) Int. Cl.: G06F 1/00, G06F 17/60

(54) **System and method for tracking the usage of electronic content over a network**

(30) Priority: 23.05.2002 US 382987 P; 21.04.2003 US 420588
(71) Applicant: Lockstream Corp., Bellevue, WA 98005 (US)
(72) Inventor: Searle, Scott, Kirkland, WA 98033 (US)
(74) Representative: Carter, Stephen John

(57) **Abstract**

A system and method for providing content use and accountability tracking over a network is described. A content package is received from a network node at an end user node. The content package includes content and an address of a designated network node. The content is used at the end user node. Tracking information describing the use of the content is generated at the end user node. The tracking information is sent from the end user node to the designated network node using the designated network node address.

## Description

### Field of the Invention

The present invention relates in general to content tracking and, in particular, to a system and method for providing content use and accountability tracking over a network.

### Background of the Invention

Over the last decade, internetworks and, in particular, the Internet, have become increasingly popular and widely accepted as a convenient and relatively inexpensive means for sharing content and communicating. One reason for the increased popularity of internetworks is the increased use of consumer-grade personal computer systems in schools and in homes.

Presently, the preferred, but not exclusive, means for exchanging and viewing content over internetworks is via a Web browser application, which interfaces to other computer systems over the Worldwide Web or, simply, the "Web." Web browsers provide a practical user interface and enable content download, upload, and viewing in a user-friendly and technologically transparent environment. Content of various types, including text, images, audio, video and the like, can readily be accessed independent of operating system or hardware platform. Text and images are typically displayed on a graphical user interface provided by each Web browser while audio and video are played using plug-in applications, which generate the necessary sound or visual signals.

Historically, information exchange over internetworks, including the Internet, has involved conventional computer systems interfacing under a client-server model. A centralized server functions as a repository of stored content and facilitator of content exchange. The server passively awaits requests from individual clients operated by end-users, which specify a desired action, such as content download, upload, or listing. Upon receiving a client request, the server executes the requested action and resumes passively awaiting a next client request. Recently, a new generation of client devices has become available and include handheld and cellular telephone devices, which include Web browser functionality in a manner analogous to conventional client systems, as well as other devices capable of interfacing over internetworks and providing a user interface for Web content exchange and viewing.

Web browsers generally provide the inherent capability to display content in the form of text and images but require added-on players for audio and video content. Typically, content players provide unrestricted use of content and lack the capability to track the use of content. The lack of use and tracking functionality within content players has continued to pose challenges to the holders of proprietary rights in content made available via the internetworks. The proprietary rights are generally in the form of copyrights or licenses, which attempt to provide notice and control over the use and distribution of held content. Moreover, pirating of content continues to frustrate and exacerbate the efforts by proprietary rights holders to enforce legitimate uses of their content.

Analogous to content players, servers also treat all content alike and lack restrictions on use or tracking of content downloaded by end-users. Unlike content players, though, servers attempt to provide content accessibility to all requesting clients independent of content type or proprietary rights. Thus, the independence of data exchange is maintained.

Nevertheless, some servers attempt to provide *ad hoc* protection to content by introducing additional layers of control. These controls include requiring a log-in by an end-user to ensure proprietary content is only made available to known and legitimized end-users. Such *ad hoc* server-based controls are inconvenient and often overly restrictive and further can only provide control over the distribution of proprietary content, not usage or tracking.

Similarly, use and tracking controls have been introduced into the content itself with limited success. Content is modified by introducing operations into the content that are executed by the content player. However, directly altering content can itself violate proprietary rights in the underlying content and can severely restrict the players upon which the content can be accessed to only those content players capable of executing the embedded operations.

Therefore, there is a need for an approach to providing server-independent content usage and accountability tracking. Preferably, such an approach would provide content controls through adjunct tracking routines, which operate in conjunction with existing content player routines.

There is a further need for an approach to providing content-independent content usage and accountability tracking. Preferably, such an approach would maintain the integrity of the content being controlled while ensuring the provision of adequate accountability safeguards.

### Summary of the Invention

The present invention provides a system and method for tracking the use of content over a network in a server- and content-independent fashion. Content and one or more tracking destinations are packaged into individual content packages, which are maintained in a packet collection. A content package is provided to a requesting client in response to a request for the content. Tracking information is generated upon each use of the content in the content package by the requesting client. The tracking information is sent to a server specified by the tracking destination in the content package. The tracking information is then processed and stored to track the content use, preferably in an encrypted tag-delimited file.

An embodiment provides a system and method for providing content use and accountability tracking over a network. A content package is received from a network node at an end user node. The content package includes content and an address of a designated network node. The content is used at the end user node. Tracking information describing the use of the content is generated at the end user node. The tracking information is sent from the end user node to the designated network node using the designated network node address.

A further embodiment provides a system and method for tracking content. Content is packaged with a tracking destination and is maintained in a collection of at least one content package. The at least one content package is provided in response to a client request for the content. At least one tracking record provided to the tracking destination is processed responsive to a use of the content provided in the at least one content package on the requesting client.

Still other embodiments of the present invention will become readily apparent to those skilled in the art from the following detailed description, wherein are described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### Brief Description of the Drawings

FIGURE 1 is a block diagram showing a system for providing content use and accountability tracking over a network, in accordance with the present invention.
FIGURE 2 is a functional block diagram showing the end user computer of FIGURE 1.
FIGURE 3 is a functional block diagram showing the content and tracking server of FIGURE 1.
FIGURE 4 is a functional block diagram showing the content server of FIGURE 1.
FIGURE 5 is a functional block diagram showing the tracking server of FIGURE 1.
FIGURE 6 is a data structure diagram showing a schema used by the content packages of FIGURE 2.
FIGURE 7 is a flow diagram showing a method for tracking content, in accordance with the present invention.
FIGURE 8 is a flow diagram showing the routine for processing tracking records for use in the method of FIGURE 7.
FIGURE 9 is a flow diagram showing the routine for storing tracking records for use in the routine of FIGURE 8.

### Detailed Description

### System Overview

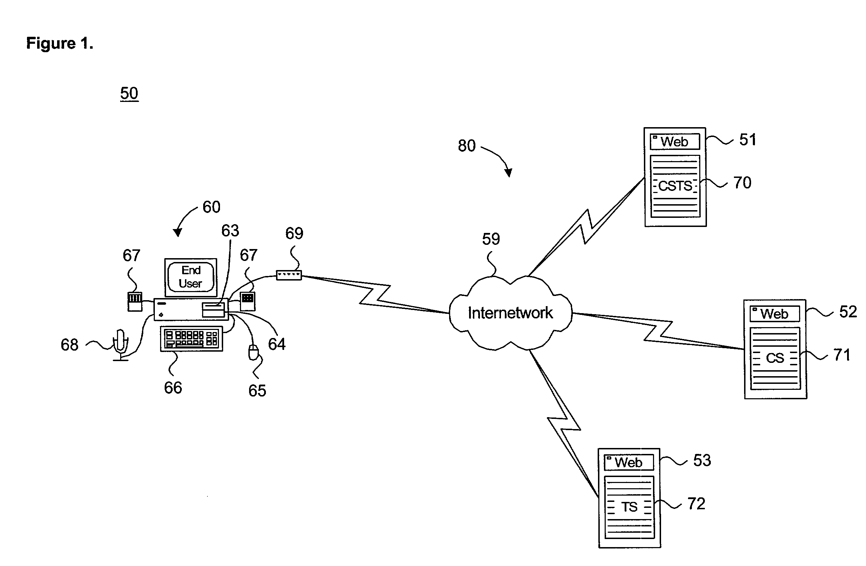

FIGURE 1 is a block diagram showing a system 50 for providing content use and accountability tracking over a network, in accordance with the present invention. An end user personal computer 60 communicates with Web servers 51, 52, 53 via a network 80, such as internetwork 59. The network 80 could be a Transmission Control Protocol/Internet Protocol (TCP/IP) based network or other type of packet switched network and can include wired, wireless, or satellite physical media interconnections, or various combinations the

Preferably, the end user computer 60 is a general purpose computer having components conventionally found in a personal computer, such as, for example, a central processing unit (CPU) 61, display 62, CD-ROM 63, hard-drive 64, mouse 65, keyboard 66, speakers 67, microphone 68, modem 69, and various components for interconnecting these elements. Further user interfacing means for inputting and displaying information from and to a human user could also be provided, such as a touch-sensitive screen, voice recognition, and the like, as would be recognized by one skilled in the art.

The end user computer 60 communicates with the network 80 via a modem 69 or similar communications component, such as a network or wireless communications card. The end user computer 60 can comprise any device capable of executing instructions and transmitting data to and from humans and other computers, including network computers lacking local storage capability, personal data assistants (PDAs) with modems, Internet-capable wireless phones and similar devices.

Each Web server 51, 52, 53 contains software and hardware for sending and receiving information and content over the network 80, such as Web pages or files. The Web servers 51, 52, 53 can be typical Web servers, a standard computer network server, or any other automated system capable of sending and receiving information and content over the network 80, as would be recognized by one skilled in the art. The Web servers 51, 52, 53 are merely illustrative and any destination server or computer system could similarly be specified. The Web servers 51, 52, 53 are capable of communicating with other computers over a network, including the Internet, wide area networks, local area networks, wireless or satellite networks, or various arrangements and combinations thereof.

The individual computer systems, including end-user computer 60 and Web servers 51, 52, 53, include general purpose, programmed digital computing devices consisting of a central processing unit, random access memory, nonvolatile secondary storage, such as a hard drive or CD ROM drive, network or wireless interfaces, and peripheral devices, including user interfacing means, such as a keyboard and display. Program code, including software programs, and data is loaded into the RAM for execution and processing by the CPU and results are generated for display, output, transmittal, or storage.

### End User Computer

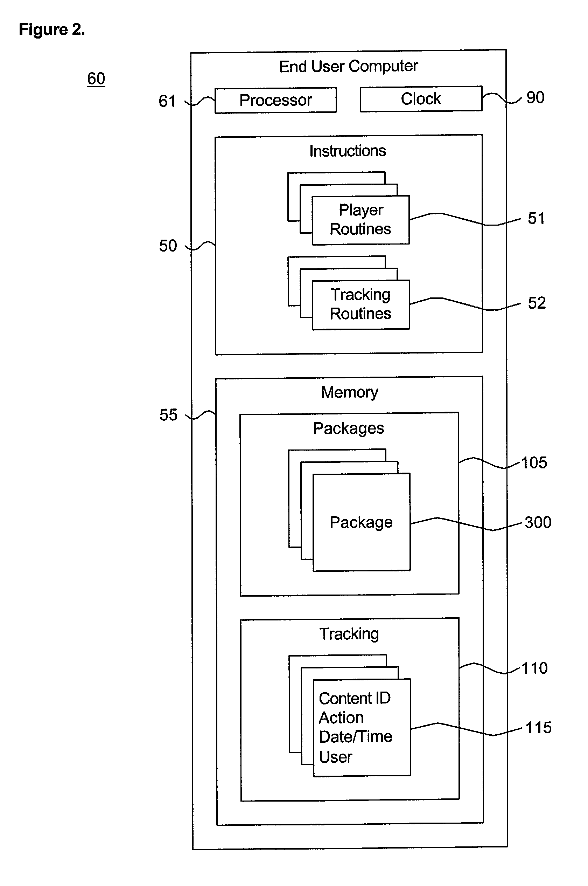

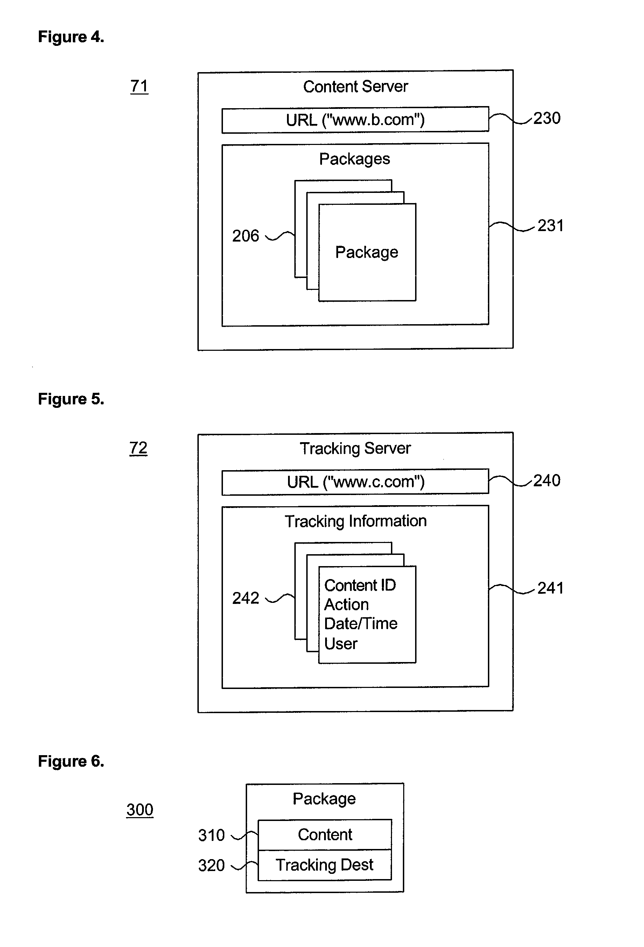

FIGURE 2 is a functional block diagram showing the end user computer 60 of FIGURE 1. The end user computer 60 includes instructions 50 and memory 55. The memory 55 stores a collection of content packages 105, such as a content package, as further described below with reference to FIGURE 6. The instructions include download, download, authenticate, play, delete and tracking operations and are executed by a processor 61 synchronized for execution to a clock 90, which retrieves, stores and manipulates data in memory 55. The instructions can be stored as a program on the hard drive 64 of the end-user computer 60 and, accordingly, the terms instructions and program can be used interchangeably. The functions, methods and routines of the program are explained in further detail below, beginning with reference to FIGURE 6. Although data in the memory 55 is shown separately from the instructions 50, the data can be modified in accordance with the instructions 50 and the program can be stored in memory 55. Moreover, although the instructions 50, processor 61 and memory 55 are all shown as being contained within the computer, the instructions 50 and memory 55 can be stored remotely external to the end-user computer, as would be recognized by one skilled in the art. In addition, although the processor 61 is shown as a single processor, the instructions can actually be distributed to a number of different components or processors for execution.

### Content and Tracking Server

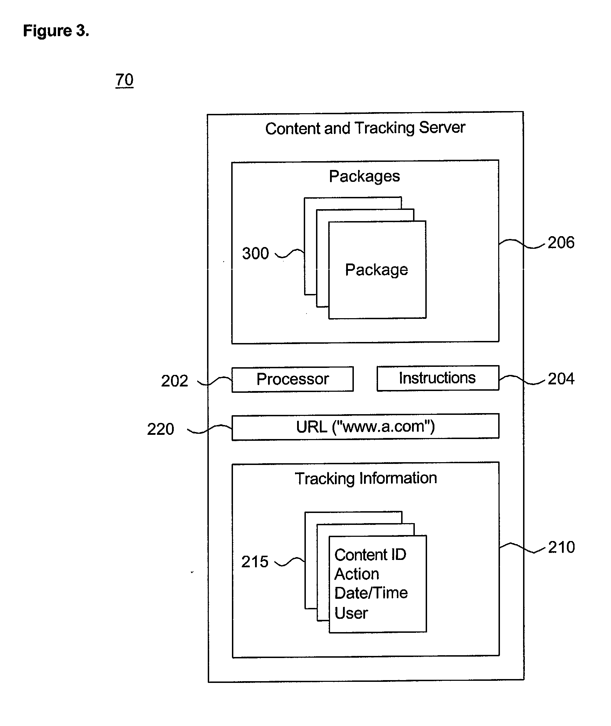

FIGURE 3 is a functional block diagram showing the content and tracking server 70 of FIGURE 1. The content and tracking server 70 includes a processor 202, instructions 204 and memory. The content and tracking server 70 provides content packages 206 to the end user computers 60. The content and tracking server 70 is the source of content, which can be transmitted to other nodes of the network 80, including other end-user computers, the content server 71, the tracking server 72, and other types and forms of networkable computer systems, as would be recognized by one skilled in the art. The content and tracking server 70 has a network address, which can be identified by a Uniform Resource Locator (URL) 220 in TCP/IP-based networks, such as the Internet. The content and tracking server 70 also stores a collection 210 of tracking records 215, as explained in more detail below.

### Content Server

FIGURE 4 is a functional block diagram showing the content server 71 of FIGURE 1. In a further embodiment, the content server 71 provides content provisioning as an adjunct to the content and tracking server 70, particularly in situations where the content and tracking server 70 is at full capacity or the requested content package is not available on the content and tracking server 70. The content server 71 includes a processor, instructions and memory (not shown). The content server 71 provides content packages 231 to the end-user computer 60. The content server 71 is the source of content, which can be transmitted to other nodes of the network 80. The content server 71 has a network address, which can be identified by a URL 230 in TCP/IP-based networks, such as the Internet.

### Tracking Server

FIGURE 5 is a functional block diagram showing the tracking server 72 of FIGURE 1. In a further embodiment, the tracking server 72 acts as an adjunct to the content and tracking server 70 to provide additional tracking capacity, particularly then the capacity of the content and tracking server 70 has been exceeded. The tracking server 72 includes a processor, instructions and memory (not shown). The tracking server 72 stores a collection 241 of tracking records 242, as explained in more detail below.

### Packages

FIGURE 6 is a data structure diagram showing a schema 290 used by the content packages of FIGURE 2. Each content package 300 includes content 310 and tracking destination information 320. The content 310 can include text, images, audio, video and the like, or any combination of the foregoing. For example, the content can comprise a song, movie, book, or picture, to name just a few forms of content 310. For ease of explanation, and by way of example, the content 310 comprises an except from "The Ring," an opera composed by Richard Wagner, entitled, "The Ride of The Valkyries."

The tracking destination 320 identifies the destination of the network server that is to receive tracking information, such as information relating to the use of the content by a node on the network. The tracking information could be any data relevant to the usage of the media, such as a content identifier, action and date and time of action, as would be recognized by one skilled in the art. The tracking destination 320 preferably contains a URL that identifies a network address. For ease of explanation, the value of the tracking destination 320 is *"www.a.com,"* which corresponds to the URL identifying the network address of the content and tracking server 70.

The instructions 50 include a number of player routines 51, which are typically found in media player programs. For example, the instructions 50 include information sufficient to enable the processor 61 to download content, authenticate content, including determining whether the end user computer 60 is authorized to play the content, play the content, and delete the content.

The program 50 further includes tracking routines 52 that work in conjunction with the foregoing routines. Whenever one of the other routines 51 is called, a tracking routine 52 is also called. The tracking routines 52 cause processor 61 to check clock 90 for the current date and time and then stores information relating to how the end user used the content 310 in a track record 115. Each tracking record 115 includes the tracking destination information 320 in the content package 300. Alternatively, the tracking record 115 can use a Content Identifier *(ContentID)* value as a reference to extract the tracking destination from the package 300 stored in the collection of packages 105.

### Method Overview

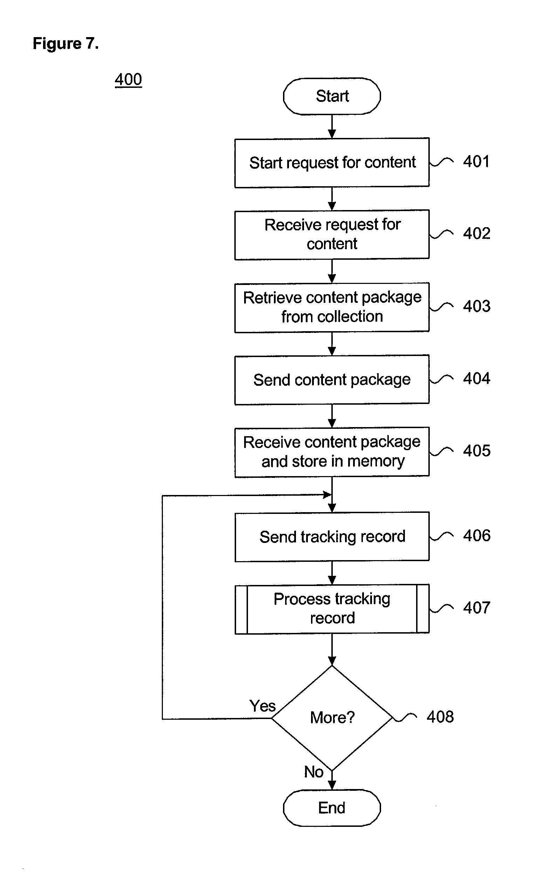

FIGURE 7 is a flow diagram showing a method 400 for tracking content 310, in accordance with the present invention. The method 400 is described as a sequence of process operations or steps, which can be executed, for instance, by a content and tracking server 70 (shown in FIGURE 1). An end user causes the program 50 of end user computer 60 to request, via network 80 content, such as the excerpt "Ride of the Valkyries" from the content and tracking server 70 (block 401). In response to the request, processor 202, in accordance with instructions 204, receives the request for content (block 402) and retrieves a content package 300 from a collection of content packages 206 (block 403). The content and tracking server 70 then sends the content package 300 to the end user computer 60 (block 403). The content package 300 includes both the content 310, including the requested operatic excerpt, and the network address if additional tracking records 115 require sending (block 407), the tracking record 115 is sent (block 406), otherwise the routine terminates.

When the end user computer 60 receives the content package 300 from the content server 70, the package is stored in memory 55 (block 405). Once the content package is downloaded, the end user can then use the content 310 in any number of different ways, including authenticating, playing, or deleting the content 310. Preferably, the tracking functionality stores a record of each event. A tracking record 115 is stored in the tracking information 110. The tracking record 115 contains values identifying the content 310, the action performed with respect to the content 310, the date and time of the action, and the destination for the tracking information. For example, when the user plays the song in the content package 300, the tracking function stores a tracking record 115 in the tracking information 110. For instance, a value ("Ride of the Valkyries") is stored in a field *("ContentID")* that identifies the operatic excerpt, a value ("Play") is stored in a field *("Action")* that identifies the action taken, and a value ("1/1/01 9:30") is stored in a field *("Date*/*Time")* identifying the date and time that the action was taken. Tracking records 115 for other events and other content will continue to accumulate in memory 55 with each subsequent action.

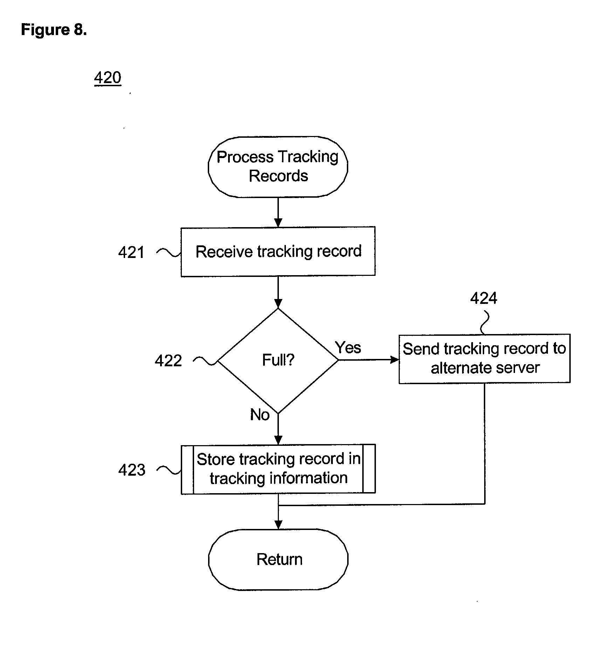

Each tracking record 115 is sent to the tracking destination 320 associated with the content 310 to which the tracking record 115 pertains. For example, the tracking information for the operatic excerpt "The Ride of The Valkyries" from content package 300 will be sent to the content and tracking server 70 identified by the URL "www.a.com," the destination designated by the content package 300. The tracking records are sent periodically to the destination 320 identified by the content package 300 (block 408) and processed (block 407), as further described below with reference to FIGURE 8. For example, the tracking records 115 may be sent on an hourly or daily basis. Alternatively, the tracking records 115 may be sent in response to a user request or in response to the end user computer 60 reconnecting to the network 80 and the network address if additional tracking records 115 require sending (block 407), the tracking record 115 is sent (block 406), otherwise the routine terminates.

### Tracking Record Processing

FIGURE 8 is a flow diagram showing the routine 420 for processing tracking records 115 for use in the method 400 of FIGURE 7. The purpose of this routine is to enable a centralized server to track the actions performed on content 310 delivered using content packages 300.

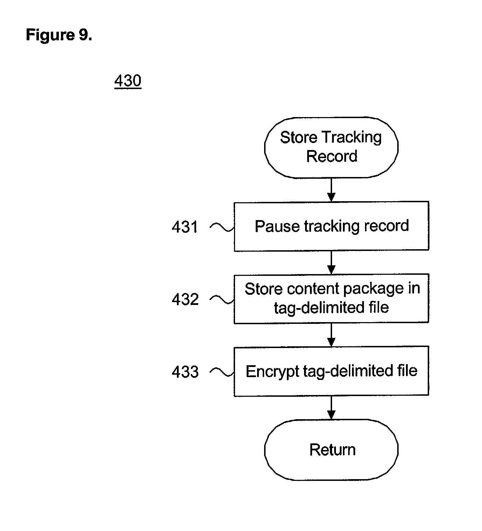

When the tracking record 215 arrives at the content and tracking server 70 (block 421), provided the content and tacking server 70 has the necessary capacity (block 422), the server stores the tracking record 215 in tracking information 210 (block 423), as further described below with reference to FIGURE 9. The tracking record 215 may be modified to reflect the identity of the end user computer 60.

By designating the content and tracking server 70 as the tracking destination, the content and tracking server 70 can automatically and directly receive tracking information about content 310 stored locally. As well, an end user computer 60 can store content packages 300 from multiple content servers for which each content provider can automatically and directly receive tracking information 210. If a content and tracking server 70 does not have the capacity to fully store or exploit the tracking information 210 (block 422), the content and tracking server 70 can designate that that the tracking information 210 be sent to a different alternate server, such as tracking server 72 (block 424).

### Tracking Record Storage

FIGURE 9 is a flow diagram showing the routine 430 for storing tracking records 115 for use in the routine 420 of FIGURE 8. The purpose of this routine is to parse each tracking record 115 to form a tag-delimited file and to encrypt the file for a secure sort of the tracking information 210.

In the described embodiment, the content 310 and tracking destination 320 can be stored in a single, encrypted file. Each field in the tracking record 115 is parsed (block 431). The content package 300 can be stored in a tag-delimited file (block 432), for example, such as an XML document, comprising: 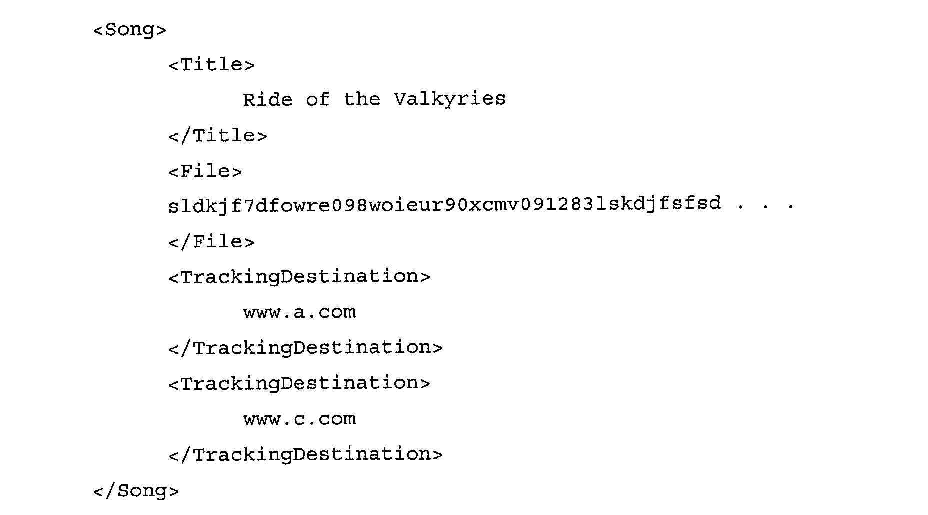 Other forms of tag-delimited languages, such as the Hypertext Markup Language (HTML), could also be used, as would be recognized by one skilled in the art. The tag-delimited file is then encrypted (block 433). By encrypting the content 310 and the tracking destination 320 together into a single file, user downloading, management and security are enhanced. The use of a single encrypted file allows multiple collections of content 310 to be combined into a single downloadable file. The tracking destination information is also secure and unchangeable by the user. The routine then returns.

In a further embodiment, the tracking destination 320 specifies multiple addresses using several URLs and is not limited to a single tracking destination. Rather, the tracking records 115 can be sent to multiple addresses on the network 80. Alternatively, the tracking destination 320 could select one address out of a list of possible servers, whereby the address selected is based on location, availability, and similar considerations.

While the invention has been particularly shown and described as referenced to the embodiments thereof, those skilled in the art will understand that the foregoing and other changes in form and detail may be made therein without departing from the spirit and scope of the invention.

## Claims

1. A system for tracking content, comprising:
a collection of at least one content package in which is maintained content packaged with a tracking destination;
a content module providing the at least one content package in response to a client request for the content; and
a tracking module processing at least one tracking record provided to the tracking destination responsive to a use of the content provided in the at least one content package on the requesting client.

2. A system according to Claim 1, further comprising at least one of:
the tracking module periodically receiving at least one such tracking record from one such requesting client; and
the tracking module receiving at least one such tracking record asynchronously from one such requesting client.

3. A system according to Claim 1, further comprising:
a parser parsing the at least one tracking record into tracking information; and
a file storing the parsed tracking information.

4. A system according to Claim 3, further comprising at least one of:
a tag-delimited file storing the parsed tracking information in a tag-delimited format; and
an encryption module encrypting the parsed tracking information.

5. A system according to Claim 1, further comprising at least one of:
a content server providing the at least one content package; and
a tracking server processing the at least one tracking record.

6. A system according to Claim 1, wherein a plurality of tracking destinations are specified with the content in the at least one content package, further comprising:
the requesting client providing the at least one tracking record to at least one such tracking destination.

7. A system according to Claim 1, wherein the tracking destination comprises a network address.

8. A system according to Claim 1, wherein the tracking record comprises at least one of a content identifier, an action performed on the content, a time and date of the action, and the tracking destination.

9. A system according to Claim 1, wherein the at least one content package and the at least one tracking record are provided in a TCP/IP-compliant networking environment.

10. A method for tracking content, comprising:
packaging content with a tracking destination maintained in a collection of at least one content package;
providing the at least one content package in response to a client request for the content; and
processing at least one tracking record provided to the tracking destination responsive to a use of the content provided in the at least one content package on the requesting client.

11. A method according to Claim 10, further comprising at least one of:
periodically receiving at least one such tracking record from one such requesting client; and
receiving at least one such tracking record asynchronously from one such requesting client.

12. A method according to Claim 10, further comprising:
parsing the at least one tracking record into tracking information; and
storing the parsed tracking information.

13. A method according to Claim 12, further comprising at least one of:
storing the parsed tracking information in a tag-delimited format; and
encrypting the parsed tracking information.

14. A method according to Claim 10, further comprising at least one of:
providing the at least one content package from a content server; and
processing the at least one tracking record on a tracking server.

15. A method according to Claim 10, further comprising:
specifying a plurality of tracking destinations with the content in the at least one content package; and
providing the at least one tracking record to at least one such tracking destination.

16. A method according to Claim 10, wherein the tracking destination comprises a network address.

17. A method according to Claim 10, wherein the tracking record comprises at least one of a content identifier, an action performed on the content, a time and date of the action, and the tracking destination.

18. A method according to Claim 10, wherein the at least one content package and the at least one tracking record are provided in a TCP/IP-compliant networking environment.

19. A computer-readable storage medium holding code for performing the method according to Claim 10.

20. A system for providing content use and accountability tracking over a network, comprising:
an end user node receiving a content package from a network node, the content package including content and an address of a designated network node;
playing routines using the content at the end user node;
tracking routines generating tracking information describing the use of the content at the end user node; and
the end user node sending the tracking information to the designated network node using the designated network node address.

21. A method for providing content use and accountability tracking over a network, comprising:
receiving a content package from a network node at an end user node, the content package including content and an address of a designated network node;
using the content at the end user node;
generating tracking information describing the use of the content at the end user node; and
sending the tracking information from the end user node to the designated network node using the designated network node address.

22. A computer-readable storage medium holding code for performing the method according to Claim 21.

23. An apparatus for providing content use and accountability tracking over a network, comprising:
means for receiving a content package from a network node at an end user node, the content package including content and an address of a designated network node;
means for using the content at the end user node;
means for generating tracking information describing the use of the content at the end user node; and
means for sending the tracking information from the end user node to the designated network node using the designated network node address.
